# EUROPEAN PATENT APPLICATION

(11) **EP 4 289 586 A1**
(43) Date of publication of application: **13.12.2023**
(21) Application number: 23177710.3
(22) Date of filing: 06.06.2023
(51) Int. Cl.: B29B 17/02

(54) **PROCESS AND PLANT FOR RECYCLING FABRICS**

(30) Priority: 07.06.2022 EP 22177613
(71) Applicant: Sanko Tekstil Isletmeleri San. Ve Tic. A.S., 16400 Inegol - Bursa (TR)
(72) Inventor: HAMITBEYLI, Agamirze, 16400 Inegol - BURSA (TR); AKBULUT, Sabrettin, 16400 Inegol - BURSA (TR); BAYRAK, Nil, 16400 Inegol - BURSA (TR); LOYAN, Kenan, 16400 Inegol - BURSA (TR); ÖZDEMIR, Mahmut, 16400 Inegol - BURSA (TR); ZEYREK, Mustafa, 16400 Inegol - BURSA (TR); IYIDOGAN, Tuncay, 16400 Inegol - BURSA (TR); TUTAL, Burak, 16400 Inegol - BURSA (TR)
(74) Representative: Gislon, Gabriele

(57) **Abstract**

In a process for recycling waste fabric comprising elastomeric material a polar solvent is flowed through the waste fabric in an extraction chamber to dissolve and remove the elastomeric material; the solvent is evaporated in an evaporation chamber and condensed to be sent to a solvent collection tank or back to the extraction chamber; the dissolved elastomeric material is eventually recovered from the concentrated polar solvent.

## Description

### Field of the invention

The present invention relates to a process and a plant for recycling textile material, namely fabrics. In greater detail, the present invention relates to a process for recovering elastomeric material from elastic fabrics, i.e. from fabrics containing elastomeric fibers.

### State of the art

Recycling used fabrics, also known as "waste fabric", has become a primary target in the textile industry; new and efficient processes for recycling are being actively researched. One of the goals is to recycle the elastomeric fibers that are present in elastic fabrics and that are commonly known e.g. as elastane, spandex, Lycra^{™}.

EP 3753630 discloses a system and method for recovering fibres from fibrous products by using two or more hydrothermal reactors in order to conduct a process of hydrolysis with acids. The fibrous products are divided into multiple batches and fed to a reactor where the batches are hydrolyzed via a superheated reaction solution containing subcritical water and one or more organic acids. The use of multiple batches allows to have smaller amounts of fabric subject to the process and closer control on process parameters, achieving better results in amount and quality of the recovered fabrics. The use of two or more reactors allows the re-usage of the organic acid-containing reaction solution. According to the reaction conditions the elastomeric fibers may be recovered in the form of fibers.

WO2013032408 relates to a method of separation of spandex PU fibres from yarns including nylon and spandex. The method comprises a controlled thermal degradation of the spandex fibers and wash separation of degraded spandex from fabric or garments containing polyamide fiber, in order to prepare the polyamide fiber and/or spandex for recycling or disposal.

WO2020130825A1 discloses a method for removal of polyurethane fibres from a fabric or yarn comprising polyurethane fibres and cellulose-based fibres. A specially chosen solvent is used, made of three ingredients: i)at least one solvent for the polyurethane fibres preferably chosen from the group consisting of dimethylformamide, dimethylacetamide, N-methyl pyrrolidone, N-butyl pyrrolidone, and/or mixtures thereof; ii) at least one amine and iii) at least one glycol.

WO2013032408 discloses a method of separation of spandex PU fibres from yarns including nylon and spandex by means of a controlled thermal degradation of the spandex fibers and wash separation of degraded spandex from fabric or garments containing polyamide fiber. Removal of degraded spandex is done by washing in a solvent, preferably polar solvent, such as Ethanol, DMAC, DMF or water.

### Summary of the invention.

In general the known methods result in an at least partial degradation of the elastomeric material. Degradation of the polymer may be detrimental to the possibility of re-using the recovered elastomeric material to provide elastic fibers having the required mechanical characteristics.

An aim of the present invention is to solve the above problem and to provide a process of waste fabric recycling that provides a safe, easy and environmentally clean way of recovering the elastomeric material from waste fabric in which it is contained without or with reduced degrading of the elastomeric material in the waste textile.

The problem is solved by means of the process according to claim 1 and by a plant according to claim 10.

According to an aspect of the invention it is provided a process for recycling waste textile containing elastomeric material, preferably elastomeric fibers, which comprises the step of extracting said elastomeric material from said waste textile through the following steps:
a) providing an amount of said waste textile in an extraction chamber;
b) circulating a solvent through said extraction chamber and said waste textile to dissolve and remove the elastomeric material from the waste textile;
c) feeding the solvent exiting said extraction chamber back to the extraction chamber at least once to re-circulate said solvent and increase the content of elastomeric material in the solvent;
d) evaporating at least part of the solvent obtained in step c) in an evaporation chamber to increase the amount of elastomeric material in the solvent;
e) condensing the evaporated solvent in at least one condensation chamber;
f) feeding at least part of the condensed solvent to said extraction chamber;
g) repeating steps b) - f) to further remove elastomeric material from said waste textile;
h) removing said concentrated solvent containing elastomeric material from said evaporation chamber to recover the elastomeric material.

In the process, the textile materials, e.g. fabrics or garments, are housed in the extraction chamber, which is still, i.e. static. The textile material is, too, in a still, i.e. static condition; the solvent is circulated, e.g. with a pump, through the static extraction chamber and through the static textiles. Typical fabrics containing elastomeric fibers that are treated according to the invention are fabrics comprising yarns having a core including elastane or other elastomeric material and a sheath of staple fibers, usually cotton or other cellulosic fibers.

In steps b) and c) the re-circulation of a solvent through the extraction chamber and the waste textile allows to increase the time in which the waste textile is in contact with the solvent. Said increase of time allows to reduce the amount of solvent to be used and thus, eventually, the overall process time needed to remove the elastomeric material from the waste textile.

In step c) the solvent containing dissolved elastomeric material that leaves the extraction chamber is fed back to the extraction chamber at least once in order to be re-circulated through the waste material so as to increase the content of elastomeric material in the solvent. The solvent is therefore subject to (preferably continuous) recirculation in the extraction chamber containing waste textile, thus allowing to increase the amount of time the same solvent contacts the waste textile. As a result the elastomeric material is dissolved and removed from the rest of the waste textile material; the amount of the elastomeric material in the solvent is increased.

According to a preferred aspect of the invention the solvent exiting the extraction chamber is filtered. The filtering of the solvent maximises the quantity of the waste textile that remain in the extraction chamber while maintaining the solvent free from solid bodies that would jeopardize the final product's quality.

According to a possible embodiment, the solvent is filtered by a filtering basket housing the waste textile in the extraction chamber. Advantageously the filter basket is a rigid structure, e.g. a metal structure, provided with filtering openings along its surface to enable a solvent flow. Housing the waste textile in a filter basket allows to constrain the flow of solvent through the waste textile in a closed volume, thus avoiding that waste textile would recirculate in the rest of the plant.

According to a possible aspect, at least steps d) and e) are carried out under reduced pressure, i.e. the plant is connected to a source of reduced pressure. Because steps d) and e) are carried out under reduced pressure it is possible to decrease the temperature needed to evaporate the solvent in the evaporation chamber which contains the extracted and dissolved elastomeric material. A lower evaporation temperature results in reduced degradation, or in a negligible degradation, of the dissolved elastomers present in the solvent in the evaporation chamber.

According to a possible aspect, the process comprises the step of heating the extraction chamber, thereby heating the solvent that flows through said chamber. Advantageously, the extraction chamber is heated to a temperature that results in increasing the temperature of the solvent and the waste textile inside the extraction chamber to a value that does not result in degradation of the elastomeric material. The increase of temperature of the waste textile and solvent is preferably such as to decrease the time required to dissolve and remove the elastomeric material from the waste textile.

In an embodiment, at least in step c) the solvent is re-circulated by means of a pump. Advantageously the recirculation of the solvent by means of a pump allows to increase the number of times that a same portion of waste textile is contacted by a volume of solvent in which the waste textile is subject to the chemical action of the solvent which would therefore speed up the dissolving step to quickly remove the elastomeric material from the waste textile.

Furthermore, differently from processes known in the art, the waste textile is kept in the extraction chamber in a still position i.e. the waste textile is not subject to stirring by means of, for example, stirring rotors. Similarly, the extraction chamber and the filtering basket housing the waste textile are configured to be in a still and static condition. In an embodiment, the textiles completely fill the basket in the extraction chamber, so that they remain in a static condition when the solvent is circulated, i.e. pumped into and out of the extraction chamber.

Advantageously, having the textile material, e.g. the fabrics, in a static condition dramatically reduces the amount of fibers, e.g. cotton and cellulosic fibers, that are loosened or broken and become detached from the textile material during the process. This results in an easier and quicker treatment of the textile and in a much better quality of the extracted elastomer in view of the extremely low amount of fiber impurities to be removed from the solvent. Actually, the mass of static textile, e.g. fabrics, may act as a filter for loose fibers.

According to a possible aspect, steps d) and e) are carried out under reduced pressure and the solvent is heated to a temperature value that is below the boiling point of the solvent at the selected pressure in the evaporation chamber, preferably below 100°C to prevent degradation of the elastomeric material.

Avoiding or greatly limiting the degradation of the elastomeric material in term of physical properties (e.g. elasticity, elongation at break point) and chemical stability (e.g. viscosity, molecular weight) is a prominent technical effect of the present invention that results in an elastomeric material which is suitable to be reused and/or recycled with a limited amount of post-treatments. Another advantage of the invention is that the process is very effective, providing a yield of 90-99% of the elastomeric material initially contained in the waste fabric.

A suitable solvent is a substance - or a mixture of substances - capable of dissolving the elastomeric polymer. According to a possible aspect of the invention, the solvent is dimethylacetamide (DMAC). DMAC is a polar solvent suitable to dissolve and remove elastomeric material. In a possible other embodiment, DMAC may be mixed with minor amounts of other substances such as e.g. dimethylformamide (DMF) suitable to dissolve elastane or other elastomeric materials, to provide a solvent for the process.

According to a possible aspect, the solvent temperature, particularly of DMAC, in the extraction chamber is in the range of 65-80 °C, preferably 70-75°C. Advantageously the temperature range of 65-80 °C, preferably 70-75 °C allows to dissolve and remove the elastomeric material from the waste textile while preventing or reducing the degradation of the dissolved elastomeric material. Advantageously, DMAC is able to dissolve the elastomeric material at a lower temperature range compared to other solvents known in the art such as DMF

In a possible embodiment, a solution of the recovered elastomeric material may be filtered (if necessary), possibly added with virgin elastomeric material (e.g. 10-30% by weight) brought to a suitable concentration (if necessary) and processed by dry spinning to manufacture elastomeric filaments.

Another object of the invention is a plant to carry out the above discussed process for recycling waste textile containing elastomeric material, preferably elastomeric fibers. According to the invention, the plant comprises an extraction chamber configured to contain a waste textile, an elastomeric material and a solvent suitable to dissolve the elastomeric material.

The extraction chamber preferably comprises at least a heater. The plant further comprises circulation means to circulate the solvent, preferably at least once, through said extraction chamber, an evaporating chamber configured to collect the solvent containing dissolved elastomeric material and to evaporate at least part of the solvent to obtain a concentrated solution of elastomeric material, an at least one condensation chamber comprising a cooling system configured to condensate the solvent evaporated in said evaporation chamber and feed said condensed solvent at least to the extraction chamber.

In a possible embodiment the recovered solvent may be fed to a solvent reservoir when the process is not operated.

According to a preferred embodiment, the extraction chamber of the plant comprises filtering means, preferably a mesh filter basket to contain the waste textile. As previously mentioned, filtering means in the extraction chamber allow to contain the waste textile and small fibers possibly detached from the textile, in the extraction chamber.

According to a possible aspect, the plant is connected to a reduced pressure circuit. Preferably said circuit includes a vacuum pump. Preferably the extraction chamber and the condensation chamber are connectable with said reduced pressure circuit.

According to a possible aspect the reduced pressure circuit of the plant is connected to said at least one condensation chamber in a way similar to a soxhlet apparatus. Preferably there are two condensation chambers connected in series to prevent solvent vapours to leave the plant.

According to a possible aspect the solvent collection tank, i.e. the solvent reservoir, is connected by suitable pipes, or conduits, to the extraction chamber and to the condensation chamber. Advantageously the solvent collection tank could contain the solvent which is removed from the evaporation chamber in the previously described step h).

Alternatively, the solvent contained in the solvent collection tank can be fed to the extraction chamber before step b) in which the solvent is circulating through the extraction chamber and the waste textile to dissolve and remove the elastomeric material from the waste textile. Advantageously, the solvent contained in the solvent collection tank and fed back to the extraction chamber can therefore provide solvent which can be recirculated through said extraction chamber and said waste textile to dissolve and remove the elastomeric material from the waste textile after a step of condensation in at least one condensation chamber.

According to a possible aspect, the solvent collecting tank is connectable to the condensation chamber to selectively receive the condensate solvent.

According to a possible aspect the evaporating chamber comprises a mixer, or stirrer, to improve the evaporation of at least part of the solvent from the solution of elastomeric material present in the evaporation chamber so as to increase the amount of elastomeric material retained in the solvent in the evaporation chamber.

Further aspects and advantages in accordance with the present disclosure will be discussed more in detail with reference to the enclosed drawings, given by way of non-limiting example, wherein:
- Fig.1 shows a schematic representation of a plant according to a possible embodiment of the present invention; and
- Fig. 2 is a flow chart illustrating an extraction process according to the invention.

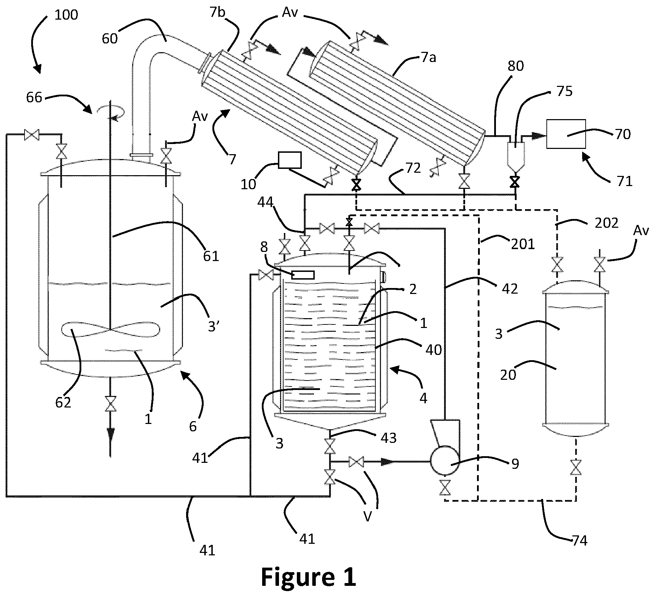

With reference to the exemplary embodiment of fig. 1, a textile recycling plant 100 comprises an extraction chamber 4 configured to contain a waste textile 2 that is an elastic textile, i.e. a textile comprising an elastomeric material 1. Extraction chamber 4 is configured to receive and contain a solvent 3 suitable to dissolve the elastomeric material 1. The extraction chamber 4 is connected to a re-circulating circuit 42 in which the solvent 3 exiting the extraction chamber from chamber outlet conduit 43 can be recirculated to the extraction chamber 4 through chamber inlet conduit 44 by circulating means 9. Preferably said circulating means 9 is a pump. Valves V are located on the circuit ducts to control the flow of solvent.

In the embodiment of Fig. 1, the extraction chamber 4 is connected to an evaporation chamber 6 through conduit 41. The extraction chamber 4 is connected to a condensation chamber 7 through conduit 72. The extraction chamber 4 is also connected to a solvent collection tank 20 through a conduit 201. Suitable valves V are provided on the cited conduits to selectively direct the flow of solvent to the required component of the plant.

The process of the invention preferably provides for the solvent containing the extracted elastomeric material to be filtered to remove fibers of other materials than the elastomeric one, e.g. to remove cotton fibers. Preferably the extraction chamber 4 comprises filtering means, such as a mesh filter basket 40, to contain the waste textile 2 comprising the elastomeric material 1.

The mesh filter basket 40 is provided with openings not shown in figure 1, which allow the solvent to flow inside the entire volume of the extraction chamber 4 and at the same time to keep the waste textile 2 inside the mesh filter basket 40. In a preferred embodiment the filtering basket is in stainless steel or is a non-woven fabric that lines it internally and acts as a filter; the non-woven fabric is resistant to the solvent used in the extraction chamber and may be used alone or may be fixed to or housed by a metal stricter such as filter basket 40 so as to retain any fiber or particles that detach from the textile material.

According to a possible aspect, the extraction chamber 4 comprises at least a heater 3. Said heater 3, during the process, heats the solvent and the waste textile 2 that are located in the extraction chamber 4 to facilitate extraction of the elastomeric material from the waste textile.

The plant further comprises an evaporating chamber 6. Said evaporating chamber 6 is configured to collect, i.e. to receive, the solution 3' containing solvent 3 and dissolved elastomeric material 1 that is obtained by recirculation of solvent in chamber 4 and to evaporate at least part of the solvent from the solution 3' to recover solvent 3 to be used in the extraction step. As previously mentioned evaporation chamber 6 is connected to extraction chamber 4 by conduit 41.

According to a possible aspect, the evaporating chamber 6 comprises stirring means, e.g. a mixer 66. Typically, as known in the art, a mixer 66 comprises a rotating rod 61 and a plurality of protrusions 62. The rotation of the protrusions 62 inside solution 3' maximises the evaporation of solvent 3 from the same. Evaporation chamber 6 is also provided with heating means to bring the solvent therein contained, preferably under reduced pressure, to its boiling point, as below detailed.

In order to recover the evaporated solvent, the plant further comprises at least one condensation chamber 7. The evaporating chamber 6 is fluidically connected to condensation chamber 7 through a duct 60. In the preferred embodiment shown in the figures the plant is provided with two condensation chambers 7a, 7b arranged and connected in series.

The condensation chamber 7 comprises a cooling system 10 configured to condensate the solvent evaporated from solution 3' housed in the evaporation chamber 6 and to feed through conduit 72 the condensed solvent to at least one of extraction chamber 4 and a solvent collection tank 20. In other words, the solvent 3 in the condensation chamber reaches the dew point allowing the solvent to condense and to be fed back to the extraction step (if the process is operated) in the extraction chamber 4 or to a solvent collection tank 20.

In the shown embodiment the plant is connected to a reduced pressure circuit 71 including a vacuum pump 70 and a separator element 75 in order to collect the solvent 3 which might flow back in the extraction chamber 4 or in the solvent collection tank 20 (batch process). Preferably, the vacuum circuit is connected to the condensation chamber that is connected to the evaporation chamber. Thus, at least evaporation chamber 6 and condensation chamber(s) 7 are kept at a reduced pressure during the invention process.

Advantageously, the reduced pressure circuit 71 is connected to the at least one condensation chamber 7 through conduit 80; in the embodiment of figure 1, which includes condensation chambers 7 and 7a, vacuum circuit 71 is connected to the end portion of chamber 7a, so as to condensate all the evaporated solvent in the two chambers before it reaches the end of the condensation chambers system.

At least the major components of the plant, i.e. extraction chamber 4, evaporation chamber 6, condensation chambers 7,7a,7b and solvent collection tank 20, are provided with ducts and valves Av to connect the plant to the atmosphere when a reduced pressure in the plant is not required.

As above mentioned, preferably the plant further comprises a solvent collecting tank 20 to store solvent 3. Said solvent collecting tank 20 is connected to the extraction chamber 4 thought a conduit 74,201 and is connected to the evaporation chamber 6 through a conduit 75. According to a possible embodiment, the condensation chamber(s) 7 is/are connected to the solvent collecting tank 20 through a conduit 202 provided with valves to direct the solvent flow either to chamber 20 or to extraction chamber 4. Preferably, the stored solvent 3 in the solvent collecting tank 20 can be directed to the extraction chamber 4 through conduits 74, 201 under reduced pressure through the reduced pressure circuit 71 and vacuum pump 70.

The invention further includes a process for recycling waste textile 2 containing elastomeric material; the elastomeric material generally is in the form of fibers in the core of yarns, the yarns usually being combined in a fabric. The fabric may be treated in a known way, e.g. by shredding or cutting into small pieces, or it may be left at least in part in its original garment form, e.g. as a pair of pants, possibly after removal of parts such as plastic labels or zippers, metal parts etcetera.

Initially, in step a), an amount of waste textile 2 is loaded into extraction chamber 4, which is preferably comprising a filter means such as a metal basket 40 and a non-woven fabric to house the waste textile 2. Preferably, the textile content of the elastomeric material is known, so as to estimate the final amount of material that can be extracted and the process conditions.

In subsequent step b), as previously discussed, solvent 3 is fed to chamber 4 and is passed through the extraction chamber to dissolve and remove the elastomeric material 1 from the waste textile 2. A preferred solvent for the elastomeric materials is DMAC. In a preferred embodiment the plant is provided with a means to feed the solvent into the extraction chamber, through the waste textile and out of chamber 4 in a controlled flow; such a flow is preferably obtained with a pump 9 that forces the solvent along the required path.

In step c) the solvent 3 that exits the extraction chamber 4 through outlet duct 43 is directed along re-circulating circuit 42 to flow back to the extraction chamber 4 through inlet duct 44 at least once to extract more elastomeric material and increase its content in the solvent. In other words, the recirculation of the solvent through circuit 42 allows to maximise the concentration of dissolved elastomeric material 1 in the solvent.

During the extraction process at least a part of the plant, namely the evaporation chamber and the condensation chambers, is normally kept under reduced pressure by connecting the plant to circuit 71. Suitable pressure values in the plant, i.e. chambers 4, 6 and 7, is about 20 to 200 mBar. Advantageously the reduced pressure will lower the boiling temperature of the solvent to facilitate evaporation of the solvent in step d) so as to reduce or prevent degradation of the extracted polymers.

To enhance extraction of the elastomeric polymer material, the extraction chamber 4 is heated. According to a possible aspect the solvent 3 is dimethylacetamide DMAC and the temperature in the extraction chamber 3 is in the range of 65-80 °C, preferably 70-75 °C. The extraction chamber is normally not connected with reduced pressure circuit 71. In a preferred embodiment, in order to transfer solvent containing the extracted elastomers from extraction chamber 4 to evaporation chamber 6, chamber 4 is connected to chamber 6 that, as above discussed, is under reduced pressure: once the two chambers are connected through duct 41 the liquid content of chamber 4 will be transferred to chamber 6.

Solvent transfer from solvent reservoir 20 to extraction chamber 4 may also be carried out by temporarily reducing pressure in chamber 4 before connecting it with reservoir 20. In general, apart from using pump 9 for circulating solvent in and out of the extraction chamber, the polar solvent is transferred to various parts of the plant by using a difference in pressure between said plant parts.

According to a possible aspect, the solvent 3 exiting the extraction chamber 4 is filtered through the mesh filter basket 40. In other words, said filtering allows to keep the waste textile 2 inside the mesh filter basket 40 during step c) allowing only the solvent 3 to exit the extraction chamber 4 through the outlet 43, the re-circulating circuit 42 and flow back to the extraction chamber 3 through the inlet 44 while keeping the waste textile 2 inside the extraction chamber 4.

Once the solvent, containing the elastomeric material 1 extracted as described at step c), has been re-circulated through the textile material enough times, i.e. for a time long enough to result in the required degree of extraction of the elastomeric material, it is directed through the conduit 41 to the evaporation chamber 6. In chamber 6 at least part of the solvent evaporates to increase the concentration of the elastomeric material 1 in the solution 3' present in evaporation chamber 6.

As above mentioned, evaporation and condensation steps are preferably carried out under reduced pressure thanks to reduced pressure circuit 71 and vacuum pump 70. The solvent 3 in the evaporation chamber 6 can thus be heated to a temperature value that is below the its boiling point at atmospheric pressure, preferably below 100 °C, to prevent degradation of the elastomeric material 1.

In step e) the solvent vapour flow along the conduit 60 to condensation chambers 7 where the vapour condenses. In the embodiment shown in figure 1 there are provided two condensation chambers 7a and 7b that are arranged and connected in series. The condensed solvent 3 is fed to the extraction chamber 4 through conduit 72; alternatively, the liquid solvent may be fed to solvent reservoir 20 through conduit 202 to be stored there or to be pumped back into extraction chamber 4 via conduit 74.

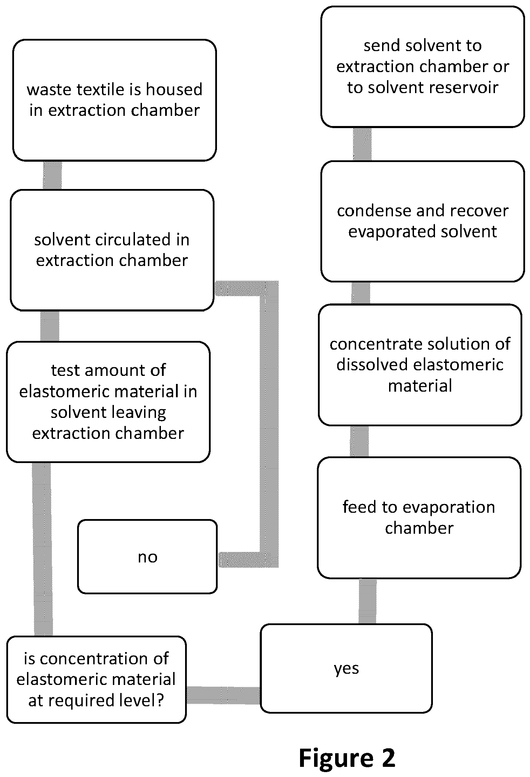

In a possible embodiment, as schematically shown in fig. 2, the solvent is recirculated through the extraction chamber until a required concentration of elastomeric material is detected before sending it to evaporation chamber 6. In a possible embodiment, steps b) - f) may be preferably repeated for at least 3 times or for 20- 30 minutes.

Finally, in step h) the concentrated solution 3' is removed from the evaporation chamber 6 and the elastomeric material 1 in the evaporation chamber 6 is recovered in a way known per se. For example, the extracted material may be precipitated from the solution 3' of DMAC and elastomeric material by mixing the solution with water.
The recovered elastomeric material may be recycled by adding it to virgin material before wet or dry spinning. The recovered material may be further treated, e.g. to remove contaminants, if any.

At the end of the extraction process it may be carried out a further step to remove and recover solvent from said waste textile, preferably said solvent recovering step is selected from pressing, squeezing, spinning or centrifuging the solvent-soaked waste textile.

The invention will be further illustrated by reference to the following non limiting examples.
EXAMPLE 1
   2 kg of fabric (79% PES-21% Elastane) were prepared by cutting the fabric in pieces, preferably cut 5x5 cm. The total amount of elastomeric material in the 2 kg of fabric was about 420 grams. The fabric was housed in a stainless-steel filtering basket. The 2 kg of fabric were put in an extraction chamber heated to 70-73°C and subjected to re-circulating of DMAC for 20 minutes. During re-circulation the solution exiting was sent to an evaporation chamber heated at 85°C at 40 mbar; the solvent was evaporated and stored in a solvent collection tank (20). At the end of the extraction process the fabric was pressed to remove the remaining solvent that was added to the solution in the evaporation chamber. The elastomeric material was precipitated from DMAC with water and dried; the recovered amount was 414.54 grams, providing a yield of 98.7 % of the initial material. The recovered material can be mixed with virgin elastomeric material in an amount of 10-30% and wet spun into elastomeric fibers.
EXAMPLE 2
   1.8 kg of fabric (%89 PES-%11 Elastane) were prepared by cutting the fabric in pieces, preferably cut 5x5 cm. The total amount of elastomeric material in the 1.8 kg of fabric was about 198 grams. The fabric was housed in a stainless-steel filtering basket. The 1.8 kg of fabric were put in an extraction chamber heated to 70-73°C and subjected to re-circulating of DMAC for 20 minutes. During re-circulation the solution exiting was sent to an evaporation chamber heated at 85°C at 40 mbar; the solvent was evaporated and stored in a solvent collection tank (20) (batch process). At the end of the extraction process the fabric was pressed to remove the remaining solvent that was added to the solution in the evaporation chamber. The elastomeric material was precipitated from DMAC with water and dried; the recovered amount was 194.04 grams, providing a yield of 98.18 % of the initial material. The recovered material can be mixed with virgin elastomeric material in an amount of 10-30% and wet spun into elastomeric fibers.
EXAMPLE 3
   2 kg of fabric (%70 Cotton-%21 PES-%9 Elastane) were prepared by cutting the fabric in pieces, preferably cut 5x5 cm. The total amount of elastomeric material in the 2 kg of fabric was about 180 grams. The fabric was housed in a stainless-steel filtering basket. The 1.8 kg of fabric were put in an extraction chamber heated to 70-73°C and subjected to re-circulating of DMAC for 20 minutes. During re-circulation the solution exiting was sent to an evaporation chamber heated at 85°C at 40 mbar; the solvent was evaporated and stored in a solvent collection tank (20) (batch process). At the end of the extraction process the fabric was pressed to remove the remaining solvent that was added to the solution in the evaporation chamber. The elastomeric material was precipitated from DMAC with water and dried; the recovered amount was 176 grams, providing a yield of 97.7 % of the initial material. The recovered material can be mixed with virgin elastomeric material in an amount of 10-30% and wet spun into elastomeric fibers.
EXAMPLE 4
   2 kg of fabric (%79 PES-%21 Elastane) were prepared by cutting the fabric in pieces, preferably cut 5x5 cm. The total amount of elastomeric material in the 2 kg of fabric was about 420 grams. The fabric was housed in a stainless-steel filtering basket. The 2 kg of fabric were put in an extraction chamber heated to 70-73°C and subjected to re-circulating of DMF for 20 minutes. During re-circulation the solution exiting was sent to an evaporation chamber heated at 70°C at 40 mbar; the solvent was evaporated and stored in a solvent collection tank (20) (batch process). At the end of the extraction process the fabric was pressed to remove the remaining solvent that was added to the solution in the evaporation chamber. The elastomeric material was precipitated from DMF with water and dried; the recovered amount was 414.2 grams, providing a yield of 98.6 % of the initial material.

## Claims

1. A process for recycling waste textile (2) containing elastomeric material, preferably elastomeric fibers, (1), comprising the step of extracting said elastomeric material from said waste textile (2), **characterized in** comprising the following steps:
a) providing an amount of said waste textile in an extraction chamber (4),
b) circulating a solvent (3) through said extraction chamber (4) and said waste textile (2) to dissolve and remove the elastomeric material from the waste textile;
c) feeding the solvent exiting said extraction chamber (4) back to the extraction chamber to increase the content of elastomeric material (1) dissolved in the solvent;
d) evaporating at least part of the solvent obtained in step c) in an evaporation chamber (6) to increase the amount of elastomeric material in the solvent;
e) condensing the evaporated solvent (3) in at least one condensation chamber (7);
f) feeding at least part of the condensed solvent (3) directly or indirectly to said extraction chamber (4);
g) repeating steps b) - f);
h) removing said concentrated solution (3') from said evaporation chamber (6) to recover the elastomeric material (1).

2. A process according to claim 1, wherein the solvent exiting said extraction chamber (4) is filtered, preferably by a filter means (40) housing said waste textile (2) in said extraction chamber (4)

3. A process according to claim 1 or 2, wherein said textiles are in a static condition during said process.

4. A process according to any previous claim, wherein at least said evaporation and condensation steps (d, e) are carried out under reduced pressure.

5. A process according to any previous claim, comprising the step of heating said extraction chamber (4).

6. A process according to any previous claim wherein at least in step c) said solvent is re-circulated by means of a pump (9).

7. A process according to any previous claim, wherein the pressure in said evaporation chamber (6) is lower than the pressure in said extraction chamber (4) and the solvent containing dissolved elastomeric material is transferred from said extraction chamber to said evaporation chamber (6) by fluidically connecting said chambers (4; 6) together.

8. A process according to any previous claim, wherein said solvent is or comprises dimethylacetamide (DMAC).

9. A process according to claim 8, wherein the solvent temperature in said extraction chamber is in the range of 65-80 °C, preferably 70-75°C.

10. A process according to any previous claim, further comprising a step to remove and recover solvent from said waste textile, preferably said solvent recovering step being selected from pressing, squeezing, spinning or centrifuging said waste textile.

11. A plant to carry out a process according to any previous claim, **characterized in that** it comprises an extraction chamber (4) configured to contain a waste textile (2) containing an elastomeric material and a solvent (3) suitable to dissolve said elastomeric material, said extraction chamber (4) preferably comprising at least a heater (8); circulation means (9) to circulate said solvent at least once through said extraction chamber (4); an evaporation chamber (6) configured to collect the solvent containing dissolved elastomeric material (1) and to evaporate at least part of said solvent (3); at least one condensation chamber (7) comprising a cooling system (10) configured to condensate said solvent evaporated in said evaporation chamber (6) and to feed said condensed solvent back to said plant.

12. A plant according to claim 11, wherein the extraction chamber (4) comprises filtering means, preferably a filtering basket (40) to house said waste textile (2).

13. A plant according to claim 11 or 12, wherein at least part of said plant is connected or connectable to a reduced pressure circuit (71), said circuit preferably including a vacuum pump (70), wherein said reduced pressure circuit (71) is connected or connectable to said at least one condensation chamber (7) that is connected or connectable to said evaporation chamber.

14. A plant according to any claim 11 to 13, wherein said circulation means comprises a re-circulating circuit (42) and a pump (9) for circulating solvent in and out of said extraction chamber (4).

15. A plant according to any claim 11 to 14, further comprising a solvent collecting tank (20) to contain said solvent (3), said solvent collecting tank (20) being connected or connectable to said extraction chamber (4) and to said condensation chamber (7).

16. A plant according to claim 15, wherein said condensation chamber (7) is connectable to said solvent collecting tank (20).
